# EUROPEAN PATENT APPLICATION

(11) **EP 4 741 784 A2**
(43) Date of publication of application: **13.05.2026**
(21) Application number: 25213304.6
(22) Date of filing: 04.11.2025
(51) Int. Cl.: G01K 1/14

(54) **RAPID RESPONSE FOOD THERMOMETER AND RELATED METHODS**

(30) Priority: 08.11.2024 US 202418941553
(71) Applicant: Apption Labs Ltd., Leicester, LE2 7SR (GB)
(72) Inventor: Nivala, Teemu, Leicester, Leicestershire, LE2 7SR (GB); Coleman, Farrell, Leicester, LE3 3RX (GB); Callaghan, David, Sutton Bonington, DE74 2GW (GB); Heibel, Jerome, Leicester, Leicestershire, LE2 7SR (GB); Yeh, Ming-Hao, Leicester, LE2 6JQ (GB)
(74) Representative: Grünecker Patent- und Rechtsanwälte PartG mbB

(57) **Abstract**

A food thermometer comprises a probe body, a temperature detecting tip, and an insertion depth sensor. The probe body has a handle affixed to one end and the temperature detecting tip affixed to the other end. The temperature detecting tip is configured to piece into a food item and determine a temperature of the food item. The temperature detecting tip comprises a thermocouple including an external thermocouple element and an internal thermocouple element. The temperature detecting tip further comprises a thermocouple junction connecting between the external thermocouple element and the internal thermocouple element of the thermocouple, and a piercing tip adjacent the thermocouple junction. The insertion depth sensor is located within the probe body and configured to operatively communicate with a microcontroller for determining an insertion depth of the piecing tip into the food item.

## Description

### PRIORITY CLAIM

This application claims the benefit of the filing date of United States Patent Application Serial No. 18/941,553, filed November 8, 2024, for "RAPID RESPONSE FOOD THERMOMETER AND RELATED METHODS," the disclosure of which is hereby incorporated herein in its entirety by this reference.

### TECHNICAL FIELD

This disclosure relates generally to food thermometers. More particularly, the present disclosure relates to a food thermometer having a rapid response temperature detecting tip and/or insertion depth probes, and to methods of making and using such food thermometers.

### BACKGROUND

Food thermometers, such as meat thermometers, are used to help provide more consistent cooking results. The use of a meat thermometer, for example, can provide an indication on whether the meat is still undercooked or if the meat is in danger of being overcooked. However, a lag time exists between food achieving a desired temperature and that temperature being indicated by conventional food thermometers. This can result in the food being exposed to the heat source longer than necessary and being overcooked.

In addition to the lag time inherent in conventional food thermometers, proper positioning of the temperature sensor(s) of conventional food thermometers can also lead to inaccurate reporting of the true food temperature. More particularly, if a food thermometer is not fully inserted into the center of a food item, such as a cut of meat, the temperature displayed may be greater than the temperature in the center, once again, which can result in the food being removed from the heat source too soon, and the food being undercooked.

### BRIEF DESCRIPTION OF THE DRAWINGS

The features and advantages of the embodiments of the present disclosure will become more apparent from the detailed description set forth below when taken in conjunction with the drawings. The drawings and the associated descriptions are provided to illustrate embodiments of the disclosure and not to limit the scope of what is claimed.
FIG. 1 illustrates a schematic diagram of a rapid response food temperature detecting tip according to an embodiment.
FIG. 2 illustrates a schematic diagram of a rapid response food thermometer having an insertion depth probe showing internal components according to an embodiment.
FIG. 3 shows wireless communications between a rapid response food thermometer and a portable electronic device according to an embodiment.
FIG. 4 illustrates a schematic diagram of a rapid response food thermometer having an insertion depth probe showing internal components according to an embodiment.
FIG. 5 illustrates a schematic diagram of a rapid response food thermometer having an insertion depth probe showing internal components according to an embodiment.
FIG. 6 illustrates a schematic diagram of a rapid response food thermometer having an insertion depth probe showing internal components according to an embodiment.
FIG. 7 illustrates a schematic diagram of a rapid response food thermometer having an insertion depth probe showing internal components according to an embodiment.
FIG. 8 illustrates a schematic diagram of a rapid response food thermometer having an insertion depth probe showing internal components according to an embodiment.
FIG. 9 illustrates a schematic diagram of a rapid response food thermometer having an insertion depth probe showing internal components according to an embodiment.
FIG. 10 illustrates a schematic diagram of a rapid response food thermometer having an insertion depth probe showing internal components according to an embodiment.

### MODE(S) FOR CARRYING OUT THE INVENTION

In the following detailed description, numerous specific details are set forth to provide a full understanding of the present disclosure. It will be apparent, however, to one of ordinary skill in the art that the various embodiments disclosed may be practiced without some of these specific details. In other instances, well-known structures and techniques have not been shown in detail to avoid unnecessarily obscuring the various embodiments.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, any relational term, such as "first," "second," "top," "bottom," "upper," "lower," "above," "beneath," "side," "upward," "downward," etc., is used for clarity and convenience in understanding the disclosure and accompanying drawings, and does not connote or depend on any specific preference or order, except where the context clearly indicates otherwise. For example, these terms may refer to an orientation of elements of any rapid response food thermometer when utilized in a conventional manner. Furthermore, these terms may refer to an orientation of elements of any rapid response food thermometer as illustrated in the drawings.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

Conventional food thermometers typically include one or more thermocouples enclosed within an outer housing, such as a tubular stainless steel outer housing. This outer housing creates a thermal barrier between an item of food in which a temperature is being measured and the one or more thermocouples enclosed in the outer housing. As such, an appreciable time delay occurs between a food item attaining a desired temperature, and that temperature being conveyed to a user by the conventional food thermometer. This delay is due to the time required for heat transfer from the food item through the thermal barrier created by the outer housing (e.g., tubular stainless steel housing) before reaching the one or more thermocouples housed therein. As a result of this delay in conveying the actual food temperature, food items (e.g., steaks, chops, roasts) are inadvertently overcooked, or potentially undercooked by a user trying to estimate and compensate for the delay.

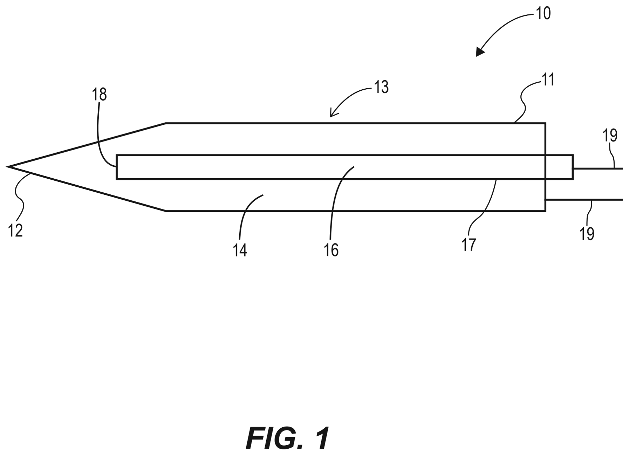

FIG. 1 illustrates a schematic diagram of a rapid response food temperature detecting tip 10 in accordance with some embodiments of the disclosure. The rapid response food temperature detecting tip 10 includes a housing 11 having a piercing tip 12 to facilitate insertion of the rapid response food temperature detecting tip 10 into a food item. The housing 11 of the rapid response food temperature detecting tip 10 is not a conventional food thermometer housing, i.e., the housing 11 is not an "outer housing" configured to receive one or more thermocouples therein. Rather, the housing 11 forms a portion of thermocouple 13 itself.

More particularly, the housing 11 is configured as an external coaxial thermocouple element 14 of the thermocouple 13. The external coaxial thermocouple element 14 may be formed of a conductive material, such as a metal or metal alloy. According to some embodiments, the external coaxial thermocouple element 14 comprises aluminum. As also shown in FIG. 1, the thermocouple 13 includes an internal coaxial thermocouple element 16. The internal coaxial thermocouple element 16 may also be formed of a conductive material, such as a metal or metal alloy. According to some embodiments, the internal coaxial thermocouple element 16 is formed of a copper-nickel alloy. The copper-nickel alloy may include from about 40 percent by weight copper to about 95 percent by weight copper. According to some embodiments, the copper-nickel alloy includes, by way of example only, about 70 percent by weight copper and about 30 percent by weight nickel, or about 90 percent by weight copper and about 10 percent by weight nickel.

An insulator 17 (e.g., electrical insulator) is formed in a surrounding relation to portions of the internal coaxial thermocouple element 16 which are coaxial and coextensive with the external coaxial thermocouple element 14. A thermocouple junction 18, i.e., an electrical connection between the external coaxial thermocouple element 14 and the internal coaxial thermocouple element 16, is disposed proximate the piercing tip 12 of the rapid response food temperature detecting tip 10, as shown in FIG. 1. In operation, a temperature gradient between the external coaxial thermocouple element 14 and the internal coaxial thermocouple element 16 creates an induced electromotive force at the thermocouple junction 18 which is converted into a temperature measurement at the thermocouple junction 18 by a temperature meter or processor (e.g., microcontroller 140, 240 as described below). The rapid response food temperature detecting tip 10 includes thermocouple leads 19 electrically connected between the external and internal coaxial thermocouple elements 14, 16, respectively, and the meter or processor (e.g., microcontroller 140, 240) which converts the induced electromotive force measured at the thermocouple junction 18 into a temperature measurement which is conveyed to a user via a corresponding output device.

The elimination of the "outer housing" (e.g., tubular stainless steel housing) of conventional food thermometers minimizes (e.g., substantially eliminates) the time delay due to the time for heat transfer from the food item through the thermal barrier created by the outer housing before reaching the one or more thermocouples housed therein. As such, the rapid response food temperature detecting tip 10 is able to convey temperature measurements to a user in near real time. In addition, positioning the thermocouple junction 18 proximate the piercing tip 12 of the rapid response food temperature detecting tip 10, combined with precise positioning of the piercing tip 12 within a food item, as described hereinafter, provides the user near real time temperature measurements from the center of the food item in order to determine a variety of food preparation parameters including, but not limited to, cooking duration, temperature adjustment set points, and resting periods.

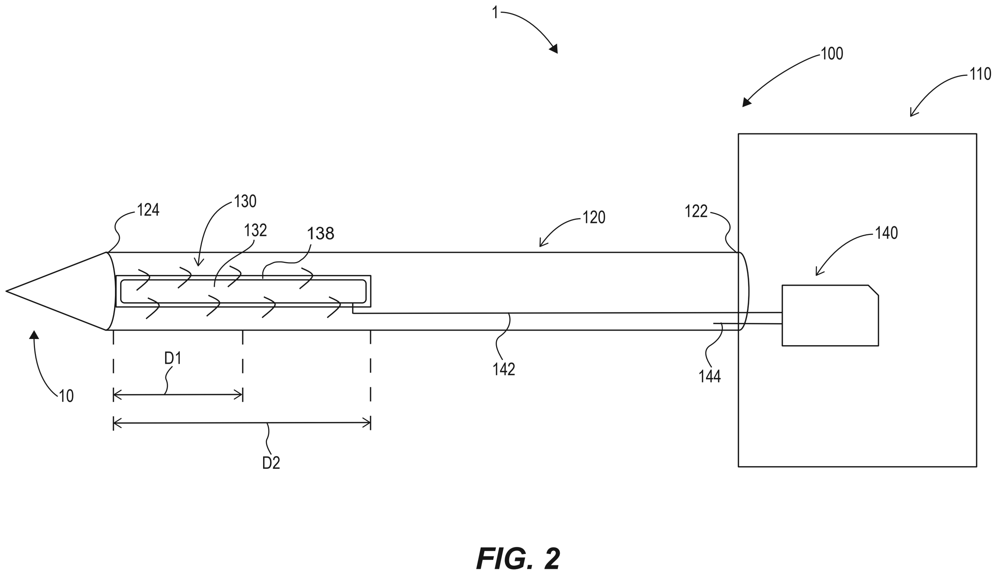

FIG. 2 illustrates a schematic diagram of a rapid response food thermometer 1 having an insertion depth probe 100 and showing internal components thereof according to an embodiment of the disclosure. More particularly, the rapid response food thermometer 1 as shown in FIG. 2 includes a rapid response food temperature detecting tip 10, and as such, exhibits the advantages thereof, as described hereinabove. The rapid response food thermometer 1 of FIG. 2 also includes an insertion depth probe 100, to facilitate precise positioning of the rapid response food temperature detecting tip 10 within a food item.

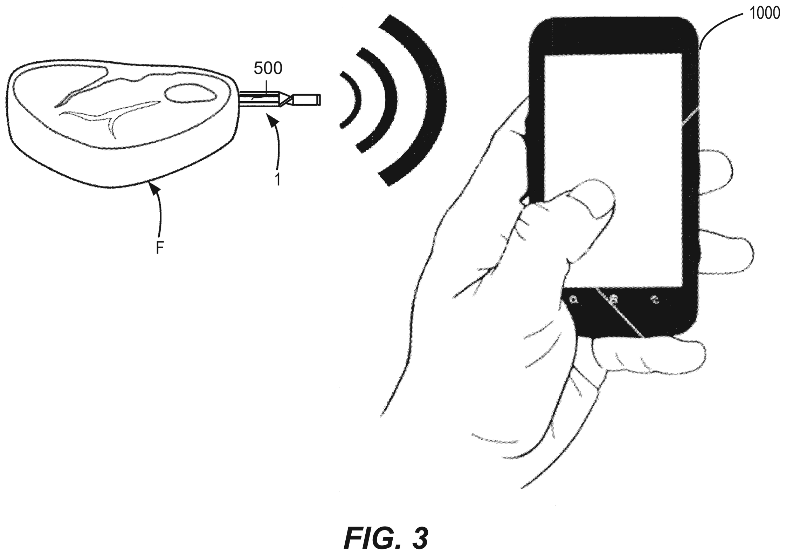

The insertion depth probe 100 includes a handle 110 in which one or more components of the insertion depth probe 100 may be disposed (e.g., microcontroller 140, power supply, wireless communication components). By way of example, the handle 110 may include a battery, and one or more of an antenna, a receiver, or a transmitter to facilitate wireless communications between the rapid response food thermometer 1 and a portable electronic device (e.g., portable electronic device 1000 as described below with reference to FIG. 3).

The insertion depth probe 100 includes a probe body 120 having a proximal end 122 and an oppositely disposed distal end 124. The handle 110 is connected to the probe body 120 at the proximal end 122, and the rapid response food temperature detecting tip 10 is connected to the probe body 120 at the distal end 124 thereof, as shown in FIG. 2.

The insertion depth probe 100 also includes a sensor 130 disposed in a sensor region between the proximal end 122 and the distal end 124 of the probe body 120. According to some embodiments, such as is shown in FIG. 2, the sensor 130 disposed in a sensor region is positioned proximate the distal end 124 of the probe body 120. The insertion depth probe 100 includes at least one sensor 130 operably positioned in the sensor region of the probe body 120.

As shown in the embodiment of FIG. 2, the sensor 130 is a capacitive electrode 132 operably positioned along the sensor region, proximate the rapid response food temperature detecting tip 10. The capacitive electrode 132 may be surrounded by an insulation material 138. The capacitive electrode 132 measures one or more electrical properties (e.g., electrical conductivity, dielectric permittivity) of a surrounding medium (e.g., a food item) relative to the corresponding electrical properties of the surrounding air. More particularly, prior to insertion of the probe body 120 of the rapid response food thermometer 1 into a food item, the capacitive electrode 132 is in proximity to and measures the electrical properties (e.g., electrical conductivity, dielectric permittivity) of the surrounding environment (e.g., air). As the probe body 120 of the insertion depth probe 100 is advanced into the food item (e.g., a cut of meat) the capacitive electrode 132 will measure a change in the electrical properties (e.g., electrical conductivity, dielectric permittivity) due to the proximity of the food item to at least a portion of the capacitive electrode 132 in the sensor region of the probe body 120. With reference again to FIG. 2, when the probe body 120 of the insertion depth probe 100 is advanced into the food item to a first depth D1, which represents insertion of about 50 percent of the length of the capacitive electrode 132 along the sensor region, such that about 50 percent of the capacitive electrode 132 measures the electrical properties (e.g., electrical conductivity, dielectric permittivity) of the food item in which it is inserted, and about 50 percent of the capacitive electrode 132 measures the electrical properties (e.g., electrical conductivity, dielectric permittivity) of the surrounding air. Further, when the probe body 120 of the insertion depth probe 100 is advanced into the food item to a second depth D2, which represents insertion of about 100 percent of the length of the capacitive electrode 132 along the sensor region, as also shown in FIG. 2, about 100 percent of the capacitive electrode 132 measures the electrical properties (e.g., electrical conductivity, dielectric permittivity) of the food item in which it is inserted.

The capacitive electrode 132 is communicative with microcontroller 140 via a signal lead 142. More particularly, the signal lead 142 transmits the electrical property measurements (e.g., electrical conductivity, dielectric permittivity) obtained by the capacitive electrode 132 to the microcontroller 140. In some embodiments, a reference lead 144 interconnects the microcontroller 140 to a portion of the probe body 120 to provide a ground reference. According to some embodiments, the capacitive electrode 132 is configured to obtain and transmit electrical property measurements (e.g., electrical conductivity, dielectric permittivity) on a continuous basis while the rapid response food thermometer 1 is actuated. In some embodiments, the capacitive electrode 132 is configured to obtain and transmit electrical property measurements (e.g., electrical conductivity, dielectric permittivity) on a continuous basis while the rapid response food thermometer 1 is actuated and while the electrical properties (e.g., electrical conductivity, dielectric permittivity) are greater than a minimum threshold value (e.g., the value of the electrical property while the rapid response food thermometer 1 is surrounded by air, such as, prior to insertion into a food item).

In operation, a user slowly inserts the rapid response food thermometer 1 into a portion of the food item. As the capacitive electrode 132 in the sensor region advances into the food item, the electrical property measurements (e.g., electrical conductivity, dielectric permittivity) transmitted to the microcontroller approach a maximum value (e.g., the value of the electrical property while the probe body 120 of the insertion depth probe 100 is advanced into the food item to a second depth D2). Once the maximum value has been detected and transmitted to the microcontroller 140, the microcontroller 140 is configured to transmit a signal to a user interface (e.g., portable electronic device 1000 as shown in FIG. 3 and described below) to alert the user that the rapid response food thermometer 1 has been inserted into the food item to a desired depth.

FIG. 3 is illustrative of wireless communications between a rapid response food thermometer and an interface (e.g., a portable electronic device) according to an embodiment of the disclosure. The rapid response food thermometer 1 may include a wireless interface component 500 configured for a wireless communication with a portable electronic device 1000 without any wired connections and without any additional hardware that serves as a connection bridge between the rapid response food thermometer 1 and the portable electronic device 1000. For example, with the wireless interface component 500, a user may determine the temperature of the food item F, while the food item F and the rapid response food thermometer 1 are positioned inside a heating vessel (e.g., a grill, an oven).

"Portable electronic device" as used herein refers to an electronic device having at least a processor, a memory, a display, and an antenna for enabling wireless communication. In one embodiment, the portable electronic device is a smartphone (such as an iPhone^{®}) or a tablet computer (such as an iPad^{®}). In other embodiments, the portable electronic device may be a smart watch or other types of smart devices with a processor and an antenna for communicating directly or indirectly with the rapid response food thermometer 1.

The portable electronic device 1000 may be utilized as an input device for the user to remotely transmit cooking instructions (e.g., type of food item, degree of preparation (e.g., rare, medium, well done), cooking duration, resting period) to the microcontroller 140, 240 of the rapid response food thermometer 1. Additionally, or alternatively, the portable electronic device 1000 may be utilized as an output device to allow the microcontroller 140, 240 of the rapid response food thermometer 1 to remotely communicate information (e.g., internal food temperature, insertion depth, suggested rest period, battery life) to the user. In some embodiments, the rapid response food thermometer 1 has an optional integral user interface (not shown), such as an integral input/output device in the handle of the device.

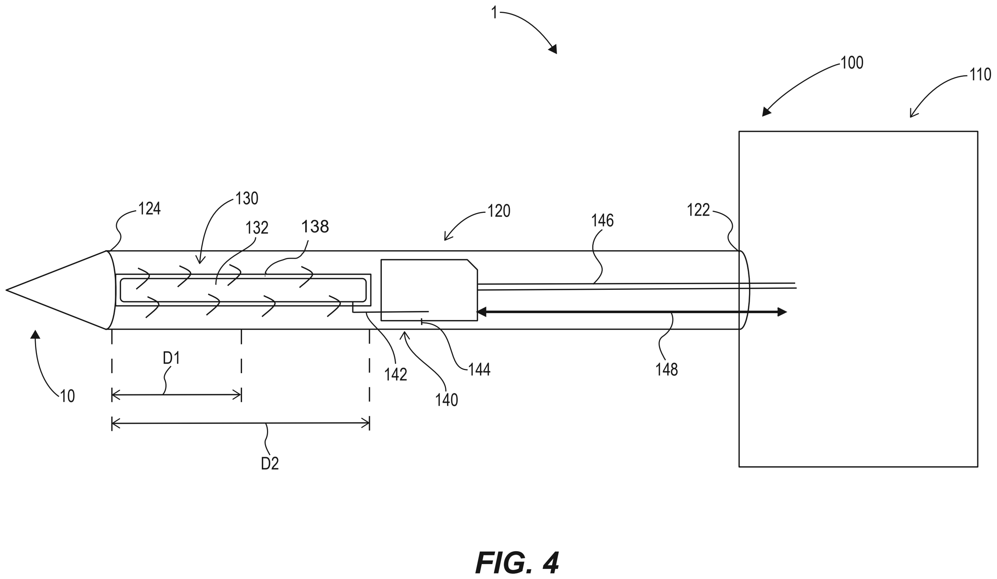

FIG. 4 illustrates a schematic diagram of a rapid response food thermometer 1 having an insertion depth probe 100 and showing internal components thereof according to another embodiment of the disclosure. More particularly, the rapid response food thermometer 1 as shown in FIG. 4 is substantially similar in construction and operation as the rapid response food thermometer 1 of FIG. 2, with the exception that the microcontroller 140 is configured and positioned in the probe body 120 proximate the sensor 130, i.e., capacitive electrode 132, operably positioned along the sensor region.

Similar to the rapid response food thermometer 1 of FIG. 2, the capacitive electrode 132 is communicative with microcontroller 140 via a signal lead 142. More particularly, the signal lead 142 transmits the electrical property measurements (e.g., electrical conductivity, dielectric permittivity) obtained by the capacitive electrode 132 to the microcontroller 140. In some embodiments, a reference lead 144 interconnects the microcontroller 140 to a portion of the probe body 120 to provide a ground reference.

As further shown in FIG. 4, power supply leads 146 are provided to interconnect the microcontroller 140 to a power supply (not shown) in the handle 110. In addition, a data transmission lead 148 is disposed between the microcontroller 140 and a wireless interface component (500 in FIG. 3) in the handle 110 of the insertion depth probe 100 to facilitate wireless communications between the rapid response food thermometer 1 and a portable electronic device 1000. For example, the wireless interface component may include one or more of an antenna, a receiver, or a transmitter.

Similar to the operation of the rapid response food thermometer 1 of FIG, 2, in operation, a user slowly inserts the rapid response food thermometer 1 of FIG. 4 into a portion of the food item. As the capacitive electrode 132 in the sensor region advances into the food item, the electrical property measurements (e.g., electrical conductivity, dielectric permittivity) transmitted to the microcontroller approach a maximum value (e.g., the value of the electrical property while the probe body 120 of the insertion depth probe 100 is advanced into the food item to a second depth D2). Once the maximum value has been detected and transmitted to the microcontroller 140, the microcontroller 140 is configured to transmit a signal to a user interface (e.g., portable electronic device 1000) to alert the user that the rapid response food thermometer 1 has been inserted into the food item to a desired depth.

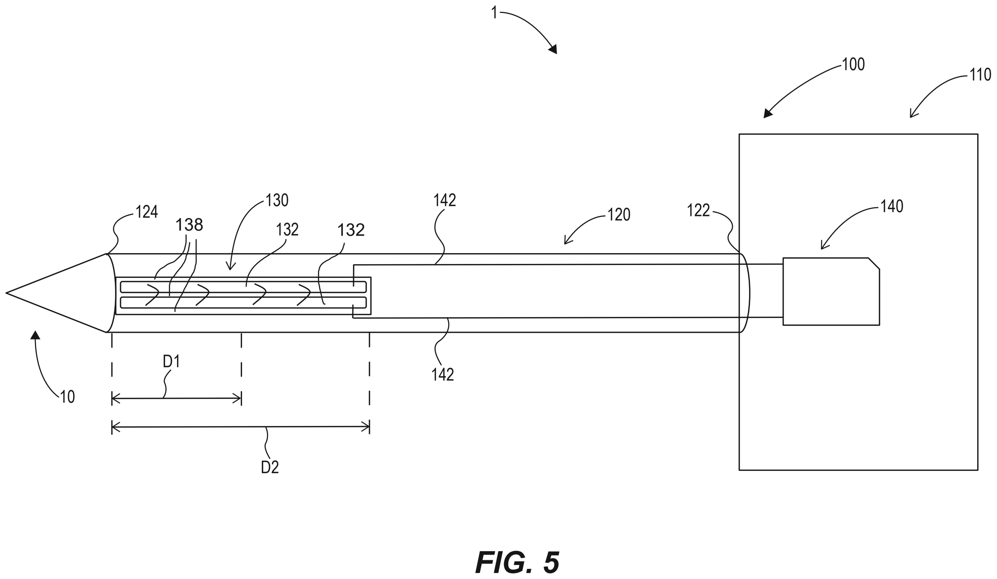

FIG. 5 illustrates a schematic diagram of a rapid response food thermometer 1 having an insertion depth probe 100 and showing internal components thereof according to one further embodiment of the disclosure. More particularly, the rapid response food thermometer 1 as shown in FIG. 5 is substantially similar in construction and operation as the rapid response food thermometer 1 of FIG. 2 with the exception of the sensor 130 including two capacitive electrodes 132 separated from each other by an insulation material 138. Each of the capacitive electrodes 132 is operably positioned along the sensor region, and communicates with the microcontroller 140 via a dedicated signal sensor signal lead 142. As may be seen from FIG. 5, each of the capacitive electrodes 132 are disposed in substantially the same position within the sensor region of the probe body 120, thereby providing redundancy and improved accuracy in detecting and transmitting insertion depth signals.

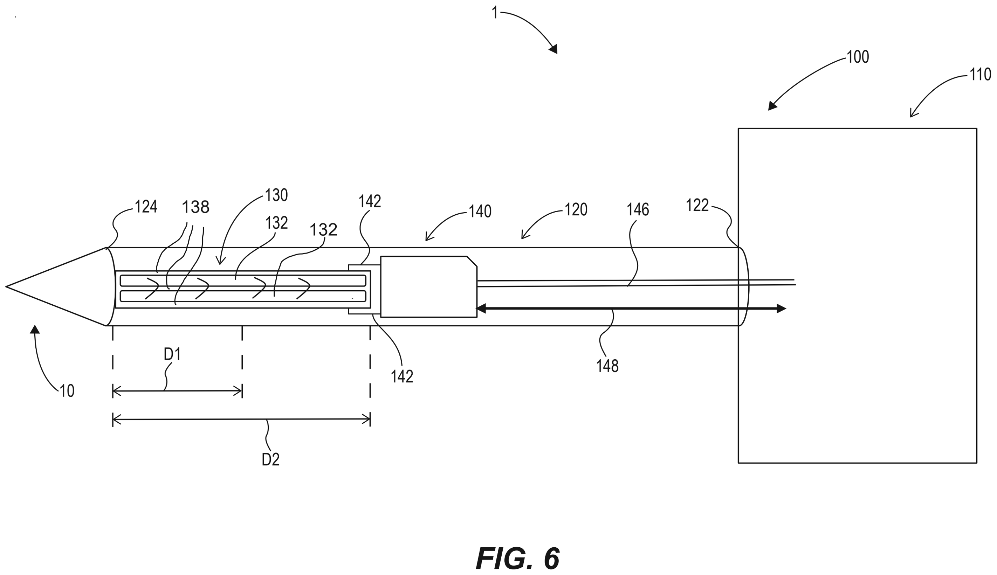

FIG. 6 illustrates a schematic diagram of a rapid response food thermometer 1 having an insertion depth probe 100 and showing internal components thereof according to yet another embodiment of the disclosure. More particularly, the rapid response food thermometer 1 as shown in FIG. 6 is substantially similar in construction and operation as the rapid response food thermometer 1 of FIG. 5 with the exception that the microcontroller 140 is configured and positioned in the probe body 120 proximate the sensor 130, i.e., capacitive electrodes 132, operably positioned along the sensor 130. As may be seen from FIG. 6, each of the capacitive electrodes 132 is disposed in substantially the same position within the sensor region of the insertion depth probe 100, once again, providing redundancy and improved accuracy in detecting and transmitting insertion depth signals.

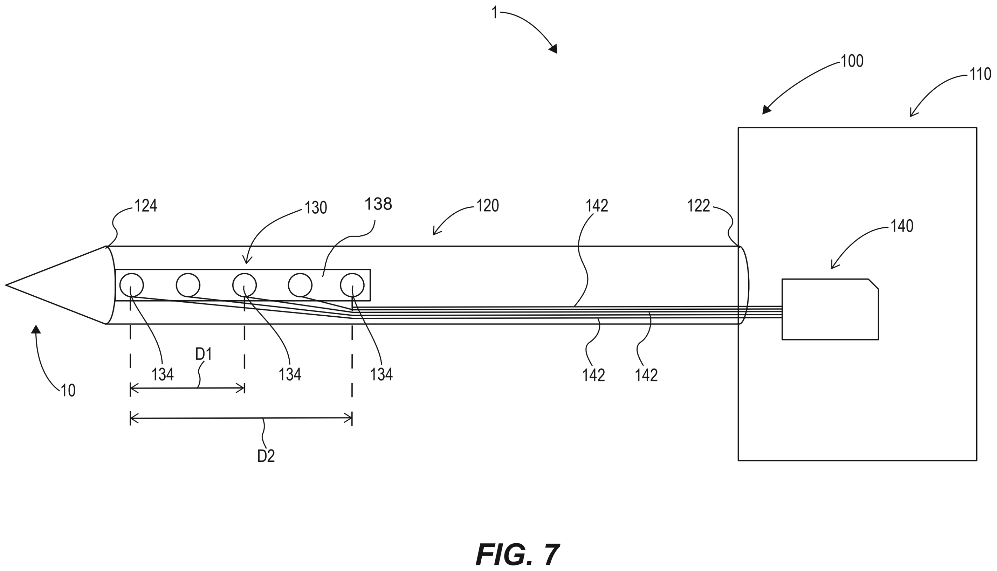

FIG. 7 illustrates a schematic diagram of a rapid response food thermometer 1 having an insertion depth probe 100 and showing internal components thereof according to still one further embodiment of the disclosure. More particularly, the rapid response food thermometer 1 as shown in FIG. 7 is similar in construction and operation as the rapid response food thermometer 1 of FIG. 2, with the exception of the sensor 130 which includes a plurality of discreet capacitive touch sensors 134 disposed in the sensor region. Each capacitive touch electrode is separated from other capacitive touch electrodes by an insulation material As may be seen from FIG. 7, the capacitive touch sensors 134 are arranged laterally along the sensor region extending from the distal end 124 of the probe body 120 towards the proximal end 122 thereof. Each of the capacitive touch sensors 134 communicates with the microcontroller 140 via a dedicated signal sensor signal lead 142.

Similar to the capacitive electrode 132, each of the capacitive touch sensors 134 measures one or more electrical properties (e.g., electrical conductivity, dielectric permittivity) of a surrounding medium (e.g., a food item) relative to the corresponding electrical properties of air. More particularly, prior to insertion of the probe body 120 of the rapid response food thermometer 1 into a food item, the capacitive touch sensors 134 are in proximity to and measures the electrical properties (e.g., electrical conductivity, dielectric permittivity) of the surrounding environment (e.g., air). As the probe body 120 of the insertion depth probe 100 is advanced into the food item (e.g., a cut of meat) the capacitive touch sensors 134 will measure a change in the electrical properties (e.g., electrical conductivity, dielectric permittivity) due to the proximity of the food item to one or more of the capacitive touch sensors 134 in the sensor region of the probe body 120. With reference again to FIG. 7, when the probe body 120 of the insertion depth probe 100 is advanced into the food item to a first depth D1, several of the capacitive touch sensors 134 are proximate the food item. As with the capacitive electrode 132, the capacitive touch sensors 134 proximate the food item measure the electrical properties (e.g., electrical conductivity, dielectric permittivity) of the food item in which it is inserted, and generate and transmit a signal to the microcontroller 140 indicating that the particular capacitive touch sensor 134 is proximate the food item. Further, when the probe body 120 of the insertion depth probe 100 is advanced into the food item to a second depth D2 such that each of the capacitive touch sensors are proximate the food item, each of the capacitive touch sensors 134 measure the electrical properties (e.g., electrical conductivity, dielectric permittivity) of the food item in which it is inserted and transmits a signal to the microcontroller 140 indicating that each of the capacitive touch sensor 134 is proximate the food item, indicative of complete insertion of the insertion depth probe 100 into the food item.

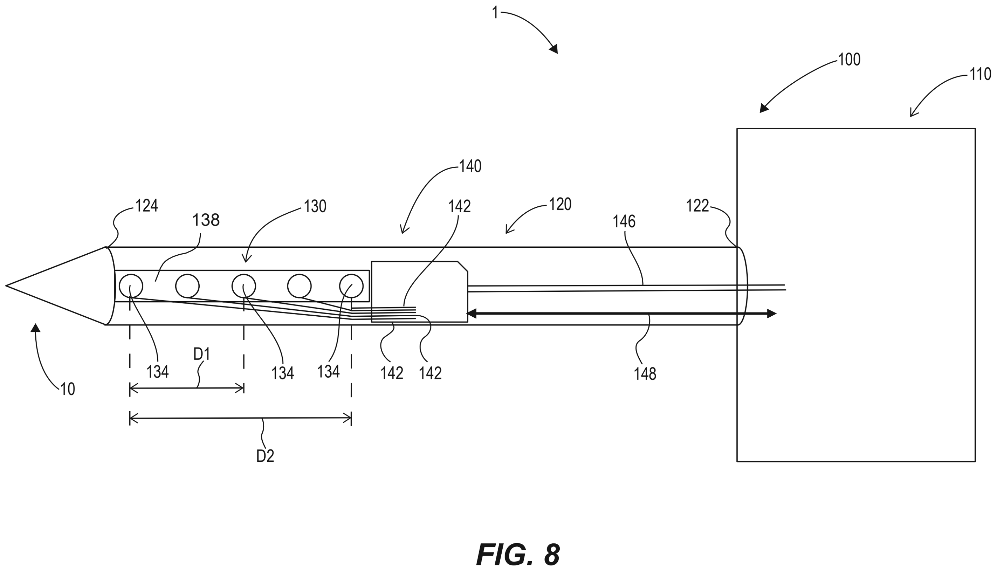

FIG. 8 illustrates a schematic diagram of a rapid response food thermometer 1 having an insertion depth probe 100 and showing internal components thereof according to yet one further embodiment of the disclosure. More particularly, the rapid response food thermometer 1 as shown in FIG. 8 is substantially similar in construction and operation as the rapid response food thermometer 1 of FIG. 7, with the exception that the microcontroller 140 is configured and positioned in the probe body 120 proximate the sensor 130, i.e., the capacitive touch sensors 134, operably positioned along the sensor region.

Similar to the rapid response food thermometer 1 of FIG. 7, capacitive touch sensors 134 are each communicative with microcontroller 140 via a dedicated signal lead 142. More particularly, the dedicated signal leads 142 transmit the electrical property measurements (e.g., electrical conductivity, dielectric permittivity) obtained by a corresponding one of capacitive touch sensors 134 to the microcontroller 140. In some embodiments, a reference lead (not shown) may interconnect the microcontroller 140 to a portion of the insertion depth probe body 120 to provide a ground reference.

As further shown in FIG. 8, power supply leads 146 are provided to interconnect the microcontroller 140 to a power supply (not shown) in the handle 110. In addition, a data transmission lead 148 may be disposed between the microcontroller 140 and one or more of an antenna, a receiver, or a transmitter (not shown) in the handle 110 of the insertion depth probe 100 to facilitate wireless communications between the rapid response food thermometer 1 and a portable electronic device 1000.

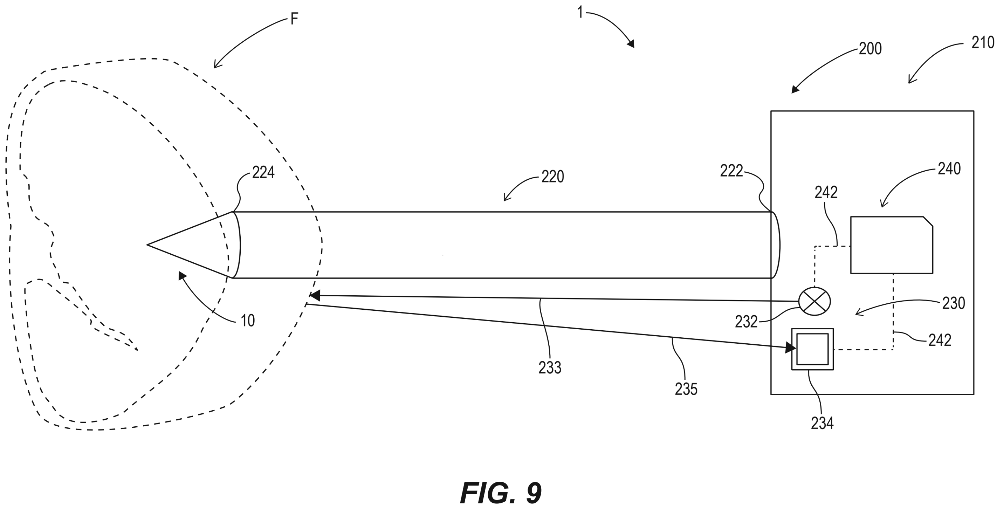

FIG. 9 illustrates a schematic diagram of a rapid response food thermometer 1 having an insertion depth probe 200 and showing internal components thereof according to one other embodiment of the disclosure. More particularly, the rapid response food thermometer 1 as shown in FIG. 9 includes a rapid response food temperature detecting tip 10, and as such, exhibits the advantages thereof, as described hereinabove. The rapid response food thermometer 1 of FIG. 9 also includes an insertion depth probe 200, to facilitate precise positioning of the rapid response food temperature detecting tip 10 within a food item.

The insertion depth probe 200 includes a handle 210 in which one or more components of the insertion depth probe 200 may be disposed (e.g., microcontroller 240, power supply, wireless communication components). By way of example, the handle 210 may include a battery, and one or more of an antenna, a receiver, or a transmitter to facilitate wireless communications between the rapid response food thermometer 1 and a portable electronic device (e.g., portable electronic device 1000 as described below with reference to FIG. 3).

The insertion depth probe 200 includes a probe body 220 having a proximal end 222 and an oppositely disposed distal end 224. The handle 210 is connected to the probe body 220 at the proximal end 222, and the rapid response food temperature detecting tip 10 is connected to the probe body 220 at the distal end 224 thereof, as shown in FIG. 9.

The insertion depth probe 200 also includes a sensor 230 disposed in the handle 210. As shown in the embodiment of FIG. 9, the sensor 230 includes an emitter 232 which generates an emitted signal 233 (e.g., light waves (e.g., infrared, laser), soundwaves (e.g., ultrasound)). The emitter 232 is operably positioned in the handle 210 to direct the emitted signal 233 (e.g., light waves (e.g., infrared, laser), soundwaves (e.g., ultrasound)) towards a food item F. The sensor 230 also includes a detector 234 operably positioned in the handle 210 to receive a detected signal 235. More particularly, each detected signal 235 corresponds to an emitted signal 233 (e.g., light waves (e.g., infrared, laser), soundwaves (e.g., ultrasound)) which has been directed towards and reflected off of the surface of the food item F back to the detector 234 in the handle 210 of the insertion depth probe 200, as shown in FIG. 9.

The insertion depth probe 200 also includes a microcontroller 240, similar to microcontroller 140 described hereinabove. As shown in FIG. 9, the sensor 230, and more particularly, the emitter 232 and the detector 234 of the sensor 230, are communicative with the microcontroller 240 via corresponding signal leads 242. More particularly, the signal lead 242 from the emitter 232 to the microcontroller 240 transmits data (e.g., time, wavelength, intensity, duration) corresponding to the emitted signals 233 generated by the emitter 232, and the signal lead 242 from the detector 234 to the microcontroller 240 transmits data (e.g., time, wavelength, intensity, duration) corresponding to the detected signals 235 received by the detector 234. The microcontroller 240 is programmed to determine the distance between the handle 210, or more precisely, the sensor 230 in the handle 210, and the food item from the data (e.g., time, wavelength, intensity, duration) of corresponding ones of the emitted signals 233 and the detected signals 235. More particularly, the microcontroller 240 may be programmed to calculate a time of flight between corresponding ones of the emitted signals 233 and the detected signals 235, and therefrom, determine the distance between the handle 210 (e.g., the sensor 230 in the handle 210) and the food item F.

In operation, a user slowly inserts the rapid response food thermometer 1 into a portion of the food item F. The sensor 230 generates emitted signals 233 and receives corresponding detected signals 235 which the microcontroller 240 utilizes to calculate the distance between the sensor 230 in the handle 210 of the insertion depth probe 200 and the food item F. Once the calculated distance between the handle 210 of the insertion depth probe 200 and the food item F reaches a desired (e.g., preprogrammed) distance value, the microcontroller 240 is configured to transmit a signal to a user interface (e.g., portable electronic device 1000 as shown in FIG. 3 and described below) to alert the user that the rapid response food thermometer 1 has been inserted into the food item to a desired depth.

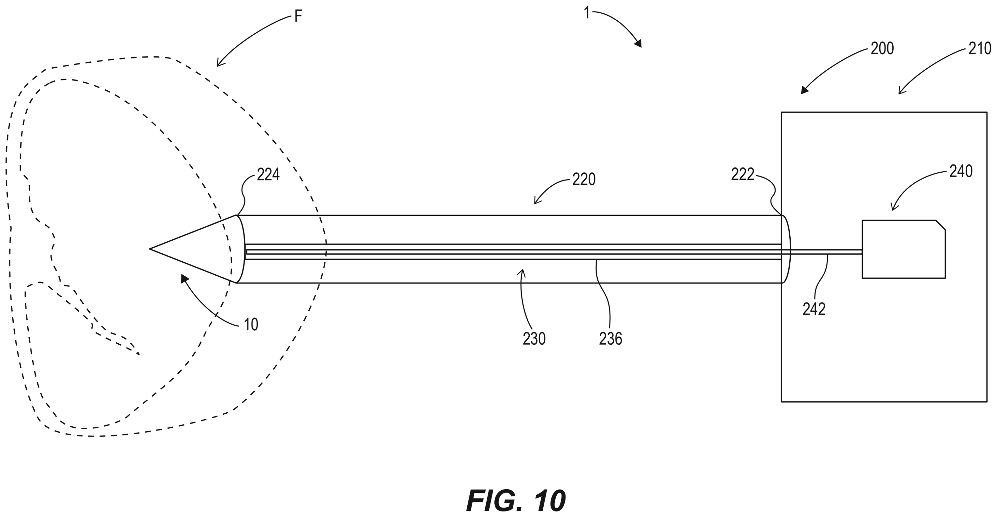

FIG. 10 illustrates a schematic diagram of a rapid response food thermometer 1 having an insertion depth probe 200 and showing internal components thereof according to still one further embodiment of the disclosure. More particularly, the rapid response food thermometer 1 as shown in FIG. 10 is substantially similar in construction and operation as the rapid response food thermometer 1 of FIG. 9, with the exception that the sensor 230 relies upon electric pulse signals generated therefrom. More particularly, electric pulse signals may be generated by the sensor 230 and directed towards the food item F via one of the transmission lines 236. A corresponding electronic pulse signal may be reflected back from the surface of the food item F and returned via the same transmission lines 236. The microcontroller 240 may be programmed to calculate a time of flight between the generated electric pulse signals and the reflected electric pulse signals, and therefrom, determine the distance between the handle 210 of the insertion depth probe 200 and the food item F.

In operation, and similar to the insertion depth probe 200 of FIG. 9, the user slowly inserts the rapid response food thermometer 1 into a portion of the food item. The sensor 230 generates electric pulse signals and receives corresponding reflected electric pulse signals which the microcontroller 240 utilizes to calculate the distance between the handle 210 of the insertion depth probe 200 and the food item F. More particularly, the microcontroller 240 may be programmed to calculate a time of flight between corresponding ones of the generated electric pulse signals and the reflected electric pulse signals, and therefrom, determine the distance between the handle 210 and the food item F. Once the calculated distance between the handle 210 of the insertion depth probe 200 and the food item F reaches a desired (e.g., preprogrammed) distance value, the microcontroller 240 is configured to transmit a signal to a user interface (e.g., portable electronic device 1000 as shown in FIG. 3 and described below) to alert the user that the rapid response food thermometer 1 has been inserted into the food item to a desired depth.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A food thermometer, comprising:
a probe body comprising a handle affixed to one end thereof;
a temperature detecting tip affixed to the other end of the probe body opposite the handle, the temperature detecting tip configured to piece into a food item and determine a temperature of the food item, the temperature detecting tip comprising:
a thermocouple including an external thermocouple element and an internal thermocouple element;
a thermocouple junction connecting between the external thermocouple element and the internal thermocouple element of the thermocouple; and
a piercing tip adjacent the thermocouple junction; and
an insertion depth sensor located within the probe body and configured to operatively communicate with a microcontroller for determining an insertion depth of the piercing tip into the food item.

2. The food thermometer of claim 1, wherein:
the external thermocouple element of the thermocouple comprises aluminum, and
the internal thermocouple element of the thermocouple comprises an alloy of copper and nickel.

3. The food thermometer of claim 2, wherein the alloy of copper and nickel comprises from about 40% to about 95% by weight of the copper based on a total weight of the alloy.

4. The food thermometer of claim 2, wherein the alloy of copper and nickel comprises:
from about 70% to about 90% by weight of the copper; and
from about 10% to about 30% by weight of the nickel.

5. The food thermometer of claim 1, further comprising a wireless interface component configured for a wireless communication with a portable electronic device.

6. The food thermometer of claim 1, further comprising an integral user interface component configured to receive an input from a user, or display an output for the user, or both.

7. The food thermometer of claim 1, wherein the insertion depth sensor comprises one or more capacitive electrode.

8. The food thermometer of claim 1, wherein the insertion depth sensor comprises an emitter to generate an emitted signal directed towards the food item, and a detector to receive a detected signal reflected from the food item.

9. A food thermometer comprising:
a probe body having a first end and a second end opposite the first end;
a handle affixed to the first end of the probe body;
a temperature detecting tip affixed to the second end of the probe body, the temperature detecting tip configured to piece into a food item and determine a temperature of the food item, the temperature detecting tip comprising:
a thermocouple including an external thermocouple element and an internal thermocouple element;
a thermocouple junction connecting between the external thermocouple element and the internal thermocouple element of the thermocouple; and
a piercing tip adjacent the thermocouple junction;
a sensor region located within the probe body proximate the temperature detecting tip, the sensor region comprising at least one capacitive electrode; and
a signal lead configured to transmit at least one electrical property measured by an insertion depth sensor to a microcontroller,
the microcontroller configured to calculate an insertion depth of the piercing tip into the food item based on the at least one electrical property measured by the insertion depth sensor.

10. The food thermometer of claim 9, wherein the microcontroller is located inside the probe body.

11. The food thermometer of claim 9, wherein the microcontroller is located inside the handle.

12. The food thermometer of claim 9, further comprising a reference lead connecting the microcontroller to a portion of the probe body to provide a ground reference.

13. The food thermometer of claim 9, wherein:
the sensor region comprises a first capacitive electrode, a second capacitive electrode, and an insulative material separating the first capacitive electrode from the second capacitive electrode, and
a signal lead comprises a first signal lead connecting the first capacitive electrode to the microcontroller, and a second signal lead connecting the second capacitive electrode to the microcontroller.

14. The food thermometer of claim 13, wherein the first capacitive electrode and the second capacitive electrodes are disposed in substantially the same position within the sensor region.

15. The food thermometer of claim 9, wherein the sensor region comprises a plurality of capacitive electrodes, each capacitive electrode separated from other capacitive electrodes by an insulation material.

16. The food thermometer of claim 15, wherein the plurality of capacitive electrodes are arranged laterally along the sensor region, extending from the second end of the probe body towards the first end of the probe body.

17. A food thermometer comprising:
a probe body having a first end and a second end opposite the first end;
a handle connected to the first end of the probe body;
a temperature detecting tip connected to the second end of the probe body, the temperature detecting tip configured to piece into a food item and determine a temperature of the food item, the temperature detecting tip comprising:
a thermocouple including an external thermocouple element and an internal thermocouple element;
a thermocouple junction connecting between the external thermocouple element and the internal thermocouple element of the thermocouple; and
a piercing tip adjacent the thermocouple junction;
an insertion depth sensor comprising an emitter to generate an emitted signal directed towards the food item, and a detector to receive a detected signal reflected from the food item; and
a microcontroller configured to operatively communicate with the insertion depth sensor for determining a distance between the insertion depth sensor and the food item.

18. The food thermometer of claim 17, wherein the emitted signal comprises a light wave, a sound wave, or an electric pulse.

19. The food thermometer of claim 17, wherein the insertion depth sensor is located within the handle.

20. The food thermometer of claim 17, wherein the insertion depth sensor comprises an emitter to generate electronic pulse signals directed towards the food items via a transmission line.

21. The food thermometer of claim 17, wherein the insertion depth sensor further comprises a linear array of coaxial thermocouple elements.
